# EUROPÄISCHE PATENTSCHRIFT

(11) **EP 2 206 897 B1**
(45) Veröffentlichungstag und Bekanntmachung des Hinweises auf die Patenterteilung: **18.01.2012**
(21) Anmeldenummer: 09176031.4
(22) Anmeldetag: 16.11.2009
(51) Int. Cl.: F01N 3/20

(54) **Fördereinrichtung für ein SCR-System**
Supply device for a SCR system
Dispositif d'alimentation pour un système SCR

(30) Priorität: 09.01.2009 DE 102009000097
(43) Veröffentlichungstag der Anmeldung: 14.07.2010
(73) Patentinhaber: Robert Bosch GmbH, 70442 Stuttgart (DE)
(72) Erfinder: Ulrich, Markus, 73635 Rudersberg (DE); Krause, Michael, 67705 Trippstadt (DE); Haeberer, Rainer, 75015 Bretten (DE)

(56) Entgegenhaltungen:
- EP-A1- 1 656 986

## Beschreibung

### Stand der Technik

Bei den sogenannten SCR-Systemen wird ein flüssiges Reduktionsmittel (z.B. Hamstoff-Wasser Lösung) bei Bedarf in den Abgasstrang einer Brennkraftmaschine eingedüst, um die katalytische Reduktion von Stickoxiden (SCR = Selective Catalytic Reduction) in einem SCR-Katalysator zu ermöglichen. Dabei zerfällt im Abgas der Harnstoff zu Ammoniak (NH₃), das mit den Stickoxiden (NOₓ) des Abgases reagiert und diese in unschädliches Wasser (H₂O) und Stickstoff (N₂) umwandelt. Ein Beispiel für ein solches System wird in der DE 10 2006 023 148 A1 beschrieben.

Aus dem Stand der Technik ist weiter bekannt, dass bspw. eine auf einem Vorratstank positionierte Pumpe das Reduktionsmittel über eine Leitung vom Vorratstank zu einem Dosiermodul fordert. Die Fördereinrichtung wird dabei mit einem konstanten Systemdruck betrieben. Dieser konstante Systemdruck wird über die Drehzahl des Pumpenmotors realisiert. Zur Darstellung einer robusten Druckregelung beinhaltet die Fördereinrichtung überdies eine hydraulische Drossel zur Saugseite der Fördereinrichtung. Das nicht in das Abgas eingedüste Reduktionsmittel fließt somit über die Drossel als Rücklauf in den Vorratstank zurück.

Aus der EP 1 656 986 A1 ist eine Fördereinrichtung für ein SCR-System bekannt bei dem die Druckhaltung in der Förderleitung und die Entlüftung der Saugleitung über ein druckgesteuertes Wegeventil und eine Drehrichtungsumkehr der Förderpumpe erfolgt.

Aus der DE 10 2006 061 732 A1 ist eine Fördereinrichtung für ein SCR-System bekannt mit einem Filter vor dem Dosiermodul, um dieses vor Verunreinigungen zu schützen. Um das System gezielt belüften zu können, ist ein 4/2-Wegeventil vorgesehen, welches die Förderrichtung der Pumpe umkehrt.

### Offenbarung der Erfindung

Der Erfindung liegt die Aufgabe zugrunde, das am Markt befindliche SCR-System dahingehend zu verbessern, dass es unempfindlicher gegenüber

Verschmutzungen ist, eine erhöhte Lebensdauer aufweist sowie die Komplexität und möglichst auch der Bauraumbedarf des Systems verringert werden.

Diese Aufgabe wird durch eine Fördereinrichtung zum Eindüsen eines flüssigen Reduktionsmittels in ein Abgassystem eines Kraftfahrzeugs nach dem Patentanspruch 1 gelöst.

Durch die erfindungsgemäße Rückleitung von Reduktionsmittel in den Vorratstank ist es möglich, das überschüssige flüssige Reduktionsmittel, das nicht über das Dosiermodul in den Abgasstrang eingedüst wird, zurückzuführen und dadurch die Druckhaltung beziehungsweise Druckregelung zu erleichtern beziehungsweise überhaupt erst zu ermöglichen. Das in der Rückleitung vorhandene vierte Filter (Rücklauffilter) verhindert, dass die in der Rücklaufleitung vorgesehene Drossel von Verunreinigungen in dem Reduktionsmittel verschlossen wird. Das vierte Filter kann ebenfalls wie das optionale dritte Filter im Vorratstank bspw. als einfaches Gewebefilter ausgestaltet sein.

Für die Erfindung wichtige Merkmale finden sich ferner in der nachfolgenden Beschreibung und in der Zeichnung, wobei die Merkmale sowohl in Alleinstellung als auch in unterschiedlichen Kombinationen für die Erfindung wichtig sein können, ohne dass hierauf jeweils explizit hingewiesen wird. Vorteilhafte Weiterbildungen finden sich in den Unteransprüchen.

Die Komponenten der Fördereinrichtung, insbesondere das Dosiermodul, das bevorzugt als schaltbares Dosierventil ausgestaltet ist, stellen hohe Anforderungen an die Sauberkeit des Reduktionsmittefs. Demzufolge ist erfindungsgemäß ein aufeinander abgestimmtes Filterkonzept vorgesehen, um die gleichbleibend gute Funktionalität Ober eine lange Lebensdauer zu ermöglichen. Das FilterKonzept muss die Fördereinrichtung wirksam gegen

Schmutz, der sich nach der Herstellung in der Fördereinrichtung befindet, Schmutzeintrag infolge der Betankung, Schmutzeintrag in Folge von Reparaturarbeiten und aus dem Reduktionsmittel entstehende Folgeprodukte schützen.

Dem erfindungsgemäßen Filterkonzept liegt die Idee zu Grunde, dass die Maschenweite der Filter so aufeinander abgestimmt ist, dass jede Komponente der Fördereinrichtung bestmöglich vor Verschmutzungen geschützt wird, welche die Funktion der Komponente beeinträchtigen könnten. Gleichzeitig erlaubt das erfindungsgemäße Filterkonzept zumindest Filter, die in der Saugleitung angeordnet sind, von einer Beladung zumindest teilweise befreien zu können. Dazu ist vorgesehen, aus dem Reduktionsmittel die Menge von herausfilterbaren Partikeln (Fasern, Zellulose, metallischer und nichtmetallischer Abrieb, etc.) auf mehrere Filter in der Fördereinrichtung zu verteilen; grobe Partikel werden zuerst herausgefiltert, anschließend etwas feinere Partikel und zum Schluss feinste Partikel. Dies kann durch eine unterschiedliche Ausgestaltung der einzelnen Filter realisiert werden. Beispielsweise würde ein zu feiner Filter im Bereich des Vorratstanks zu einer schnellen Beladung des Filters führen und dadurch einen ungewollten Druckverlust an der Saugseite der Pumpe hervorrufen.

Durch die erfindungsgemäße Anordnung wird ein gleichmäßiger Durchfluss des Reduktionsmittels durch die Fördereinrichtung gewährleistet.

Für die Ausgestaltung des gesamten Filterkonzepts ist es günstig, wenn das zweite Filter ein Hutfilter ist. Das Hutfilter ist üblicherweise zylindrisch aufgebaut und weist einen Filterboden auf. Die zylindrischen Flächen und der Filterboden bestehen aus einem Filtergewebe. Aufgrund eines geringen zur Verfügung stehenden Bauraumes ist das Hutfilter klein gebaut. Die Strömungsgeschwindigkeit des Reduktionsmittels und der darin schwebenden Verunreinigungen sind daher bei dem Hutfilter relativ groß. Die Partikel bewegen sich beim Hutfilter zunächst parallel zum seitlich angeordneten Filtergewebe. Während die Flüssigkeit bevorzugt seitlich das Filtergewebe passiert, bewegen sich die Partikel aufgrund ihrer Trägheit geradeaus weiter. Am Boden des Hutfilters angekommen, werden insbesondere lang ausgebildete Partikel ggf. mit einer Spitze in das Filtergewebe eindringen. Aufgrund der dort herrschenden relativ großen Strömungsgeschwindigkeit, werden sie sich jedoch parallel zum Filtergewebe umlegen und zusammen am Filterboden einen Filz bilden. So kann sich der Schmutz am Filterboden ansammeln, verfilzen oder sedimentieren. Natürlich wird auch Schmutz angesammelt, der bspw. bei einem Service oder bei einem eventuellen Tausch der Pumpe in die Saugleitung gelangt. Das Reduktionsmittel kann jedoch weiterhin ungehindert über das Filtergewebe im zylindrischen Bereich des Hutfilters abfließen. In einer alternativen Ausgestaltung des Hutfilters kann der Filterboden auch von vorn herein geschlossen sein. In einer nochmals alternativen Ausgestaltung kann das Filter auch als flaches Gewebefilter gefertigt sein.

Das zweite Filter kann in seiner Filterwirkung unterstützt werden, wenn an der Saugleitung im Bereich des Vorratstanks ein zusätzliches, drittes Filter vorgesehen ist. Dadurch findet eine Filterung statt, bevor das Reduktionsmittel in die Saugleitung eintritt. Das dritte Filter kann bspw. als flaches Gewebefilter ausgestaltet sein und kann auch durch einen konisch ausgeführten Ansaugstutzen der Saugleitung wesentlich großflächiger als der Querschnitt der Saugleitung sein. Da das dritte Filter in das Reduktionsmittel eintaucht setzen sich keine Partikel in diesem Filter fest kann und es ergibt sich dadurch eine Selbstreinigung dieses Filters.

Während einer Wartung des Kraftfahrzeugs kann vor einem Nachfüllen von Reduktionsmittel bei Bedarf eine Reinigung des Vorratstanks von herausgefilterten Partikeln vorgenommen werden. Das dritte Filter kann in gewissem Umfang lange dünne Partikel durchlassen. Aufgrund des großen Querschnitts des Filters bewegen sich die langen Partikel nur sehr langsam auf die Filteroberfläche zu. Da die Bewegung dieser langen Partikel senkrecht zur Filteroberfläche verläuft, dringen sie teilweise stirnseitig in das Filtergewebe ein und werden dieses im Laufe des Betriebs teilweise durchdringen und Richtung des oben beschriebenen zweiten Filters weiter schwimmen.

Kurz vor dem Eintritt des Reduktionsmittels in das Dosiermodul wird das Reduktionsmittel von dem ersten Filter gefiltert. Das druckseitig angeordnete erste Filter muss auch kleinste Verunreinigungen aus dem Reduktionsmittel filtern, da das Dosiermodul sehr empfindlich gegenüber Verunreinigungen ist. Dieses Filter kann als Feinfilter mit einem Gewebe oder als ein 3D-Papierfilter ausgestaltet sein. Das Reduktionsmittel ist bereits zweimal (durch das zweite und dritte Filter) gefiltert. Deshalb kann das Feinfilter sehr klein ausgeführt sein. Das bedeutet einerseits, dass das Feinfilter nur einen minimalen Bauraum benötigt, andererseits erleichtert dies das Auftauen des Reduktionsmittels, wenn das Reduktionsmittel festgefroren sein sollte.

In der Praxis ist das Fördermodul auf dem Vorratstank angeordnet. Die Saugleitung und die Rückführleitung durchdringen dabei die Gehäuse des Fördermoduls und des Vorratstanks, wobei das zweite Filter in einer Bohrung des Gehäuses des Fördermoduls eingepresst ist. Das zweite Filter kann in den Zulauf des Fördermoduls (Saugleitung) gegen einen Anschlag eingepresst werden, insbesondere wenn das Gehause des Fördermoduls und das zweite Filter aus Kunststoff bestehen. Dann muss nämlich aufgrund eines Kriechverhaltens des Kunststoffs, insbesondere unter den unterschiedlichen Temperatureinflüssen, mit einem Lockern der Pressung des zweiten Filters gerechnet werden, d.h. das zweite Filter kann aus der vorgesehenen Bohrung herauswandern. Um dieses zu verhindern, wird am Gegenstück des

Fördermoduls ein Steg angebracht. Dieser verhindert das Herauswandern des zweiten Filters.

### Kurzbeschreibung der Figuren

Nachfolgend werden anhand der Figuren Ausführungsbeispiele der Erfindung beispielhaft erläutert. Es zeigen:

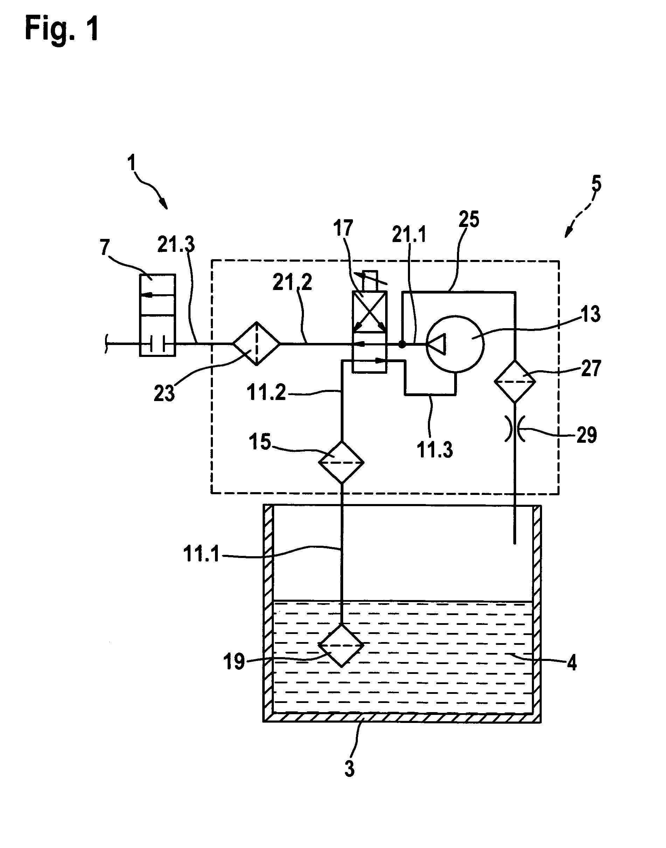

- Figur 1: eine schematische Darstellung einer erfindungsgemäßen Fördereinrichtung;
- Figur2: eine Detailansicht eines zweiten Filters aus Figur 1 in einem Längsschnitt; und
- Figur 3: das zweite Filter aus Figur 1 oder 2 im Längsschnitt in einem eingebauten Zustand.

### Detaillierte Beschreibung

Die erfindungsgemäße Fördereinrichtung ist in ihrer Gesamtheit mit dem Bezugszeichen 1 gekennzeichnet und umfasst einen Vorratstank 3 für ein flüssiges Reduktionsmittel 4 (z.B. eine Hamsäure-Wasser-Lösung) zur katalytischen Reduktion von Stickoxiden in einem SCR-Katalysator (nicht dargestellt) eines Kraftfahrzeugs, ein durch Leitungen mit dem Vorratstank 3 verbundenes Fördermodul 5 und ein Dosiermodul, das als schaltbares Dosierventil 7 ausgestaltet ist. Wenn das Dosierventil 7 geöffnet ist, gelangt Reduktionsmittel 4 durch die Leitung 21.3 zu einem Injektor (nicht dargestellt), der das Reduktionsmittel in einen Abgasstrang des Kraftfahrzeugs (nicht dargestellt) eindüst.

Im Fördermodul 5 wird über eine Saugleitung 11 das Reduktionsmittel 4 durch eine Pumpe 13 vom Vorratstank 3 in das Fördermodul 5 gepumpt und anschließend über ein erstes Filter 23 dem Dosierventil 7 zugeführt. Die Saugleitung 11 wird durch ein zweites Filter 15 in einen ersten Abschnitt 11.1 und einen zweiten Abschnitt 11.2 unterteilt und weiter durch ein 4/2-Ventil 17 in einen dritten Abschnitt 11.3 unterteilt. Das zweite Filter 15 ist wegen eines in der Regel geringen Bauraums klein gebaut und bevorzugt als Hutfilter ausgestaltet. Eine detaillierte Beschreibung des Hutfilters folgt weiter hinten.

Am Anfang der Saugleitung 11 ist ein drittes Filter 19 vorgesehen, das in das Reduktionsmittel 4 eintaucht. Das dritte Filter 19 kann als flaches Gewebefilter ausgestaltet sein und hat durch einen konisch ausgeführten Ansaugstutzen der Saugleitung 11 einen wesentlich größeren Querschnitt als die Saugleitung (nicht dargestellt).

Am Ausgang der Pumpe 13 ist eine Förderleitung 21 vorgesehen, die wiederum durch das 4/2-Ventil 17 in einen ersten Abschnitt 21.1 und einen zweiten Abschnitt 21.2 unterteilt wird und anschließend durch das erste Filter 23 in einen dritten Abschnitt 21.3 unterteilt wird. Das Filter 23 ist ein Feinfilter, das kleinere Partikel als die Filter 15 und 19 aus dem Reduktionsmittel 4 herausfiltert und flach ausgestaltet sein kann. Vom Abschnitt 21.1 zweigt eine Rückleitung 25 für nicht gefördertes Reduktionsmittel 4 ab. In der Rückleitung 25 sind ein viertes Filter 27 und einer stromabwärts des vierten Filters 27 angeordneten Druckhalteeinrichtung, hier in Form einer Drossel 29, angeordnet. Das vierte Filter 27 ist als flach ausgeführter Gewebefilter ausgestaltet und filtert Partikel in der Größe wie Filter 15 und 19. Die Rückleitung 25 mündet in den Vorratstank 3.

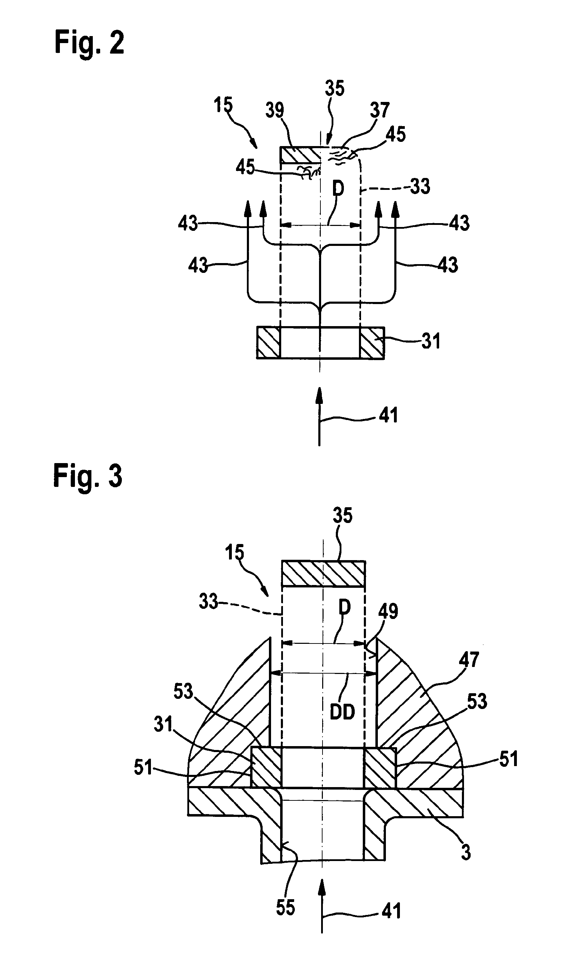

Figur 2 zeigt zwei Ausführungsformen des Filters 15 im Detail. Das Filter 15 ist als Hutfilter ausgestaltet und weist einen ringförmigen Sockel 31 auf, auf dem ein steifes Filtergewebe in Form eines Zylinders 33 angeordnet ist. Der Zylinder 33 ist an der vom Sockel 31 abgewandten Seite durch einen Filterboden 35 geschlossen. Dabei kann der Filterboden 35 das gleiche Filtergewebe (vgl. Bezugszeichen 37) wie der Zylinder 33 aufweisen, wie auf der rechten Seite in Figur 2 dargestellt ist.

Der Filterboden 35 kann aber auch durch ein am Filterboden 35 eingesetztes Flachstück 39 undurchlässig sein, wie auf der linken Seite in Figur 2 dargestellt ist. Der Innendurchmesser D des Sockels 31 entspricht dabei dem Durchmesser des Zylinders 33. Die bevorzugte Strömungsrichtung 41 durch das Filter 15 ist vom Sockel 31 zum Filterboden 35, wobei das Reduktionsmittel 4 bevorzugt den zylindrischen Bereich das Filtergewebe passiert (vgl. Bezugszeichen 43). Am Filterboden 35 sammeln sich für das Filtergewebe undurchlässige Partikel 45.

Figur 3 zeigt das Filter 15 eingebaut in ein Gehäuse 47 des Fördermoduls 5. Dazu weist das Gehäuse 47 eine Bohrung 49 auf, dessen Durchmesser DD deutlich größer ist als der Durchmesser D des Zylinders 33. Der Sockel 31 ist in eine radiale Aussparung 51 im Innenbereich der Bohrung 49 dichtend eingesetzt. Der Sockel 15 und das Gehäuse 47 schließen danach bündig ab. Der Sockel 31 liegt einerseits an einem axialen Anschlag 53 des Gehäuses 47 und andererseits axial an dem Vorratstank 3 auf. Der Tank 3 weist eine Öffnung 55 auf, durch die das Reduktionsmittel 4 in das zweite Filter 15 einströmen kann.

Die Fördereinrichtung 1 arbeitet in folgender Weise:

Im Fördermodul 5 ist das 4/2-Ventil 17 zunächst so geschaltet, dass die Pumpe 13 Reduktionsmittel 4 aus dem Vorratstank 3 über die Saugleitung 11 ansaugen kann. Dabei wird das Reduktionsmittel 4 zunächst im dritten Filter 19 vorgefiltert. Für das Filter 19 undurchlässige Partikel verbleiben dabei im Vorratstank 3. Ein Verschließen des Filters 19 ist unwahrscheinlich, da einerseits der Filter 19 im Reduktionsmittel 4 eintaucht und andererseits die Partikel durch den großen Querschnitt des Filters 19 mit einer niedrigen Geschwindigkeit zum Filter 19 bewegt werden, so dass die Partikel im Wesentlichen locker am Filter 19 anliegen. Das Reduktionsmittel 4 gelangt anschließend in das zweite Filter 15 (Hutfilter). Dort werden weitere Partikel 45 herausgefiltert. Die Strömungsgeschwindigkeit ist in dem klein gebauten zweiten Filter 15 entsprechend groß, die Partikel 45 bewegen sich entsprechend schneller. Die Partikel 45 bewegen sich im Hutfilter 15 zunächst parallel zum seitlich angeordneten Filtergewebe. Während das Reduktionsmittel 4 bevorzugt seitlich das Filtergewebe passiert, werden sich die Partikel 45 aufgrund ihrer Trägheit geradeaus weiterbewegen. Am Filterboden 35 angekommen, werden die Partikel 45 einen Filz bilden; das Reduktionsmittel 4 passiert weiterhin das seitlich angeordnete Filtergewebe.

Danach passiert das Reduktionsmittel 4 das 4/2-Ventil 17 und die Pumpe 15. An einem Ausgang der Pumpe 15 ist die Förderleitung 21 angeschlossen. Das Reduktionsmittel 4 wird wieder durch das 4/2-Ventil 17 gefördert. Durch die entsprechende Stellung des 4/2-Ventils 17 wird das Reduktionsmittel 4 durch das Feinfilter 23 gefördert und gelangt anschleißend mit hinreichender Sauberkeit zum Dosierventil 7, über das das Reduktionsmittel 4 mit Hilfe eines Injektors in einen Abgasstrang eines Kraftfahrzeugs (nicht dargestellt) eingedüst wird.

Zu einer Entlüftung der Förderleitung 21 kann das 4/2-Ventil 17 umgestellt werden, so dass bei geöffnetem Dosierventil 7 durch die Pumpe 13 ein Rücklauf des Reduktionsmittels 4 stattfinden kann. Dabei wird Reduktionsmittel 4 in umgekehrter Richtung durch das zweite Filter 15 gefördert. Dabei können die abgelagerten Partikel 45 am Filterboden 35 zumindest teilweise in den Vorratstank 4 zurückgeführt werden.

## Patentansprüche

1. Fördereinrichtung (1) zum Eindüsen eines flüssigen Reduktionsmittels (4) in ein Abgassystem einer Brennkraftmaschine, umfassend mindestens einen Vorratstank (3) für das Reduktionsmittel (4), eine Saugleitung (11), eine Förderleitung (21), eine Pumpe (13) ein erstes Filter (23), ein Dosiermodul (7) und ein Ventil (17), wobei die Pumpe (13) zwischen der Saugleitung (11) und der Förderleitung (21) angeordnet ist, und wobei das erste Filter (23) in Strömungsrichtung vor dem Dosiermodul (7) angeordnet ist, wobei das Ventil (17) vier Anschlüsse und zwei Schaltpositionen aufweist (4/2-Ventil), und dass das Ventil (17) in einer ersten Schaltposition das Reduktionsmittel (4) von der Saugleitung (11) zur Pumpe (13) und anschließend von der Pumpe (13) in die Förderleitung (21) leitet und in einer zweiten Schaltposition das Reduktionsmittel (4) von der Förderleitung (21) zur Pumpe (13) und anschließend von der Pumpe (13) in die Saugleitung (11) leitet, **dadurch gekennzeichnet, dass** die Fördereinrichtung (1) in der Saugleitung (11) in Strömungsrichtung vor dem Ventil (17) ein zweites Filter (15) angeordnet ist, dass in der Förderleitung (21) zwischen der Pumpe (13) und dem Ventil (17) eine Rückleitung (25) angeordnet ist, dass die Rückleitung (25) in den Vorratstank (3) mündet und dass in der Rückleitung (25) ein viertes Filter (27) und eine Druckhalteeinrichtung, insbesondere eine Drossel (29) oder ein Druckregelventil, vorgesehen sind..

2. Fordereinrichtung (1) nach Anspruch 1, **dadurch gekennzeichnet, dass** das erste Filter ein Feinfilter (23) ist.

3. Fördereinrichtung (1) nach Anspruch 1 oder 2, **dadurch gekennzeichnet, dass** das zweite Filter ein Hutfilter (15) ist.

4. Fördereinrichtung (1) nach einem der vorhergehenden Ansprüche, **dadurch gekennzeichnet, dass** an der Saugleitung (11) im Bereich des Vorratstanks (3) ein drittes Filter (19) vorgesehen ist.

5. Fördereinrichtung (1) nach einem der vorhergehenden Ansprüche, **dadurch gekennzeichnet, dass** das dritte Filter (19) und das vierte Filter (27) ein Gewebefliter ist.

## Claims

1. Delivery device (1) for injecting a liquid reducing agent (4) into an exhaust system of an internal combustion engine, comprising at least one storage tank (3) for the reducing agent (4), a suction line (11), a delivery line (21), a pump (13), a first filter (23), a dosing module (7) and a valve (17), wherein the pump (13) is arranged between the suction line (11) and the delivery line (21), and wherein the first filter (23) is arranged upstream of the dosing module (7) in the flow direction, wherein the valve (17) has four ports and two switching positions (4/2 valve), and wherein the valve (17), in a first switching position, conducts the reducing agent (4) from the suction line (11) to the pump (13) and subsequently from the pump (13) into the delivery line (21), and in a second switching position, conducts the reducing agent (4) from the delivery line (21) to the pump (13) and subsequently from the pump (13) into the suction line (11), **characterized in that** a second filter (15) is arranged in the suction line (11) upstream of the valve (17) in the flow direction, **in that** a return line (25) is arranged in the delivery line (21) between the pump (13) and the valve (17), **in that** the return line (25) opens into the storage tank (3), and **in that** a fourth filter (27) and a pressure-maintaining device, in particular a throttle (29) or a pressure regulating valve, are provided in the return line (25).

2. Delivery device (1) according to Claim 1, **characterized in that** the first filter is a fine filter (23).

3. Delivery device (1) according to Claim 1 or 2, **characterized in that** the second filter is a cap filter (15).

4. Delivery device (1) according to one of the preceding claims, **characterized in that** a third filter (19) is provided on the suction line (11) in the region of the storage tank (3).

5. Delivery device (1) according to one of the preceding claims, **characterized in that** the third filter (19) and the fourth filter (27) are fabric filters.

## Revendications

1. Dispositif d'alimentation (1) pour l'injection d'un agent réducteur fluide (4) dans un système d'échappement d'un moteur à combustion interne, comprenant au moins un réservoir (3) pour l'agent réducteur (4), une conduite d'aspiration (11), une conduite d'alimentation (21), une pompe (13), un premier filtre (23), un module de dosage (7) et une soupape (17), la pompe (13) étant disposée entre la conduite d'aspiration (11) et la conduite d'alimentation (21), et le premier filtre (23) étant disposé dans la direction de l'écoulement avant le module de dosage (7), la soupape (17) présentant quatre raccords et deux positions de commutation (soupape à 4/2 voies), et la soupape (17) dans une première position de commutation conduisant l'agent réducteur (4) de la conduite d'aspiration (11) jusqu'à la pompe (13) et ensuite de la pompe (13) dans la conduite d'alimentation (21), et dans une deuxième position de commutation conduisant l'agent réducteur (4) de la conduite d'alimentation (21) jusqu'à la pompe (13) et ensuite de la pompe (13) dans la conduite d'aspiration (11), **caractérisé en ce qu'**un deuxième filtre (15) est disposé dans la conduite d'aspiration (11) dans le sens de l'écoulement avant la soupape (17), **en ce que** dans la conduite d'alimentation (21) entre la pompe (13) et la soupape (17) est disposée une conduite de retour (25), **en ce que** la conduite de retour (25) débouche dans le réservoir (3) et **en ce que** dans la conduite de retour (25) sont prévus un quatrième filtre (27) et un dispositif de maintien de pression, notamment un étranglement (29) ou une soupape de régulation de la pression.

2. Dispositif d'alimentation (1) selon la revendication 1, **caractérisé en ce que** le premier filtre est un filtre à mailles fines (23).

3. Dispositif d'alimentation (1) selon la revendication 1 ou 2, **caractérisé en ce que** le deuxième filtre est un filtre-chapeau (15).

4. Dispositif d'alimentation (1) selon l'une quelconque des revendications précédentes, **caractérisé en ce qu'**un troisième filtre (19) est prévu sur la conduite d'aspiration (11) dans la région du réservoir (3).

5. Dispositif d'alimentation (1) selon l'une quelconque des revendications précédentes, **caractérisé en ce que** le troisième filtre (19) et le quatrième filtre (27) sont des filtres en tissu.
